# EUROPÄISCHE PATENTSCHRIFT

(11) **EP 0 907 215 B1**
(45) Veröffentlichungstag und Bekanntmachung des Hinweises auf die Patenterteilung: **02.01.2002**
(21) Anmeldenummer: 97117171.5
(22) Anmeldetag: 02.10.1997
(51) Int. Cl.: H01M 8/02, C03C 17/02, C03C 3/091, C03C 8/24, C03C 10/00

(54) **Abdichten einer Hochtemperatur-Brennstoffzelle oder eines Hochtemperatur-Brennstoffzellenstapels**
Sealing a high temperature fuel cell of a high temperature fuel cell stack
Rendre étanche une pile à combustible fonctionnant à haute température ou un empilement de piles à combustible fonctionnant à haute température

(43) Veröffentlichungstag der Anmeldung: 07.04.1999
(73) Patentinhaber: SIEMENS AKTIENGESELLSCHAFT, 80333 München (DE)
(72) Erfinder: Blum, Ludger, 91058 Eltersdorf (DE); Fleck, Robert, 91325 Adelsdorf (DE); Jansing, Thomas, 90425 Nürnberg (DE)

(56) Entgegenhaltungen:
- EP-A- 0 562 724
- WO-A-97/34331
- DE-A- 4 334 438
- DE-C- 19 608 727
- US-A- 3 939 295
- US-A- 5 376 197
- US-A- 5 453 331
- PATENT ABSTRACTS OF JAPAN vol. 018, no. 290 (E-1557), 2.Juni 1994 & JP 06 060891 A (TONEN CORP), 4.März 1994, -& CHEMICAL ABSTRACTS, vol. 121, no. 2, 11.Juli 1994 Columbus, Ohio, US; abstract no. 13967, MUKAISAWA: "Sealing materials for fuel cells" XP002058755 -& JP 06 060 891 A (TONEN CORP) 4.März 1994

## Beschreibung

Die Erfindung bezieht sich auf eine Hochtemperatur-Brennstoffzelle und auf einen Hochtemperatur-Brennstoffzellenstapel.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch eine elektrochemische Verbindung von Wasserstoff (H₂) und Sauerstoff (O₂) zu Wasser entsteht elektrischer Strom mit hohem Wirkungsgrad und, wenn als Brenngas reiner Wasserstoff (H₂) eingesetzt wird, ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte, usw.

Die Elektrolyt-Elektroden-Einheit umfaßt dabei zwei Elektroden und einen zwischen den beiden Elektroden angeordneten, als Membran ausgeführten Festelektrolyten. Dabei bildet jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Die Bauelemente (beispielsweise die beiden metallischen Verbundleiterplatten) der Hochtemperatur-Brennstoffzelle werden für den Betrieb in Teilbereichen (den sogenannten Fügebereichen) miteinander gefügt (bei den Verbundleiterplatten beispielsweise im Randbereich). Unter Fügen versteht man das passende Aneinandersetzen oder Verbinden von Werkstücken oder Werkstoffen durch verschiedene Verfahren (beispielsweise durch Schrauben, Nieten, Schweißen, usw.). Dementsprechend wird als Fuge die Trennungsöffnung zwischen zwei zu verbindenden Werkstücken (hier Bauelementen) bezeichnet.

An die Schicht, die im Fügebereich die Fuge zwischen den Bauelementen schließt, werden verschiedene Anforderungen gestellt: Die Schicht muß eine ausreichende Gasdichtigkeit aufweisen. Durch einen beispielsweise im Randbereich der Brennstoffzelle angeordneten Fügebereich (auch äußerer Fügebereich genannt) wird so gewährleistet, daß die Betriebsmittel, die in der Brennstoffzelle im gasförmigen Zustand vorliegen, nicht aus der Brennstoffzelle heraus in die Umgebung gelangen. Ist der Fügebereich im Inneren der Brennstoffzelle angeordnet (innerer Fügebereich), so wird beispielsweise eine Vermischung von verschiedenen Betriebsmitteln (zum Beispiel Wasserstoff (H₂) und Sauerstoff (O₂)) verhindert.

Die Schicht muß außerdem gegenüber einem erhöhten Druck unempfindlich sein. Die Betriebsmittel in der Brennstoffzelle weisen nämlich einen erhöhten Druck gegenüber der Umgebungsatmosphäre auf.

Außerdem muß die Schicht eine ausreichende mechanische Stabilität gegenüber in der Brennstoffzelle auftretenden mechanischen Spannungen aufweisen. Aufgrund von Temperaturänderungen, beispielsweise bei Einschalt- und Ausschaltvorgängen eines Hochtemperatur-Brennstoffzellenstapels, der sich in der Regel aus wenigstens 40 Brennstoffzellen zusammensetzt, oder auch bei Änderung der Betriebstemperatur (diese kann je nach Anforderung zwischen 600 und 1000 °C liegen), wirken erhebliche mechanische Kräfte auf den Fügebereich ein. Auch beim Zusammenbau des Hochtemperatur-Brennstoffzellenstapels (genauer beim mechanischen Absetzen des Stapels) sind mechanische Spannungen nicht zu vermeiden.

Der Werkstoff der Schicht im äußeren Fügebereich sollte zudem eine ausreichende elektrische Isolation aufweisen. Ein elektrischer Kurzschluß zwischen den Bauelementen, die durch die Schicht miteinander gefügt sind, ist zu vermeiden, da hierdurch eine Verringerung des Wirkungsgrades der Brennstoffzelle verursacht wird. Elektrochemische Stabilität muß vorgegeben sein, damit der geringe elektrische Verluststrom, der dennoch über die Schicht abfließt, nicht den Werkstoff der Schicht zersetzt und zu einer Undichtigkeit der Schicht gegenüber einem Gasdurchsatz führt.

Der Werkstoff der Schicht muß zudem stabil gegenüber einer chemischen Reaktion mit den Betriebsmitteln innerhalb der Brennstoffzelle sein. Die Betriebsmittel liegen in der Brennstoffzelle in Form von reduzierenden feuchten Gasen vor, die chemisch aggressiv auf den Werkstoff der Schicht einwirken können. Hierdurch kann es ebenfalls zu Undichtigkeiten im Fügebereich der Brennstoffzelle kommen. Eine chemische Verträglichkeit mit dem Werkstoff der zu fügenden Bauelemente muß zusätzlich gewährleistet sein.

Aus der Internationalen Anmeldung WO 96/17394 sind Schichten zum Fügen von Bauelementen einer Hochtemperatur-Brennstoffzelle bekannt, die Lagen aus einem Glas und Lagen aus einer Keramik enthalten. Die Lagen aus Glas oder Keramik stehen in Form von vorgefertigten Rahmen zur Verfügung. Die Fertigung dieser Rahmen ist mit hohen Kosten verbunden, da die Rahmen mit hoher Präzision (im µm-Bereich) gefertigt werden müssen. Außerdem erfordert die Montage der verschiedenen Lagen, entsprechend der großen Anzahl von Brennstoffzellen in einem Stapel, erheblichen Justier- und Meßaufwand. Um ausreichend stabile Glasrahmen zu erhalten, ist das Glas mit Zusätzen (beispielsweise Arsenoxid (As₂O₃)) versehen. Die Zusätze beeinträchtigen teilweise die Qualität des Fügebereiches hinsichtlich der geforderten Eigenschaften.

Die Keramikrahmen werden vorzugsweise durch atmosphärisches Plasmaspritzen oder durch Vakuumplasmaspritzen hergestellt. Die auf diese Art und Weise hergestellten Rahmen weisen bei längeren Einsatzzeiten in der Brennstoffzelle keine ausreichende Gasdichtigkeit auf.

Der Erfindung liegt nun die Aufgabe zugrunde eine Hochtemperatur-Brennstoffzelle anzugeben, wobei die Bauelemente der Brennstoffzelle mechanisch und chemisch stabil und dennoch kostengünstig gefügt sind.

Bei einer Hochtemperatur-Brennstoffzelle mit zwei Bauelementen, die in einem Fügebereich durch eine Schicht miteinander gefügt sind, enthält die Schicht gemäß der Erfindung wenigstens eine Lage aus einem Glaslot und wenigstens eine Lage aus einer Glaskeramik. "Glaskeramik" (auch Vitrokeramik genannt) ist eine Bezeichnung für polykristalline Festkörper, die durch Keramisierung, d.h. gesteuerte Entglasung (Kristallisation) von Gläsern, hergestellt werden. Eine Glaskeramik entsteht durch Wärmebehandlung eines geeigneten Glases, in welchem dadurch Kristalle erzeugt werden. Diese glaskeramischen Werkstoffe enthalten ebenso wie keramische Werkstoffe noch einen gewissen Anteil an Glasphase neben diesen Kristallen. Als "Glaslot" (auch Lötglas genannt) wird ein leicht schmelzendes Glas mit niedriger Viskosität und kleiner Oberflächenspannung bei einer Verschmelzungstemperatur zwischen 400 und 700 °C bezeichnet. Es wird zwischen thermisch entglasbaren (kristallisierenden) und relativ entgalsungsfesten Glasloten unterschieden.

Die Schicht, die wenigstens ein Glaslot und wenigstens eine Glaskeramik enthält, ist gasdicht. Wird die Schicht zum Fügen von zwei Bauelementen innerhalb einer Brennstoffzelle verwendet, d.h. nicht im Randbereich der Brennstoffzelle, so werden durch die wenigstens zweilagige Schicht zwei Gasräume mit verschiedenen gasförmigen Betriebsmitteln gasdicht gegeneinander isoliert. Bei einer Anordnung der Schicht im Außenbereich der Brennstoffzelle gelangt nunmehr kein Betriebsmittel aus der Brennstoffzelle in die Umgebungsatmosphäre.

Die Schicht zeigt ein hohes elektrisches Isolationsverhalten von einigen 100 kΩ • cm². Sie ist nach einer Betriebsdauer von über 1000 Stunden chemisch unverändert, d.h. daß der Werkstoff der Schicht keiner chemischen Zersetzung unterworfen ist.

Die Schicht ist nach einer Wärmebehandlung von mehr als 1000 Stunden im wesentlichen auskristallisiert. Die Lage aus der Glaskeramik ist vollständig auskristallisiert, währenddessen die Lage aus dem Glaslot wenigstens teilweise auskristallisiert ist. Bedingt durch den hohen Kristallisationsgrad der Schicht kommt es zu einer geringen Wechselwirkung mit den zu verbindenden Bauelementen, die beispielsweise aus einer Chrom-Eisen-Basislegierung oder aus Zirkonoxid (ZrO₂) bestehen. Auch gegenüber einer chemischen Reaktion mit einem Betriebsmittel der Brennstoffzelle (beispielsweise mit Wasserstoff (H₂) oder Sauerstoff (O₂)) sind die Lagen aus im wesentlichen auskristallisierten Werkstoffen wesentlich beständiger als Lagen aus nicht kristallisierenden Loten.

Die im wesentlichen auskristallisierte Schicht besitzt eine höhere Viskosität als reine Gläser und ist demzufolge auch wesentlich druckbeständiger. Beim Betrieb der Brennstoffzelle besteht zwischen dem Innenraum der Brennstoffzelle und der Umgebungsatmosphäre ein Druckgefälle. Die Betriebsmittel der Brennstoffzelle weisen einen erhöhten Druck gegenüber der Umgebungsatmosphäre auf. Die zweilagige Schicht ist aufgrund des hohen Kristallisationsgrades der Glaskeramiklage und der dünnen Glaslotlage in der Lage diesem von innen nach außen wirkenden Druck standzuhalten. Bei den aus dem Stand der Technik bekannten Schichten zum Fügen von Bauelementen einer Brennstoffzelle kann die Schicht aufgrund des entstehenden Druckes wenigstens teilweise aus der Brennstoffzelle herausgedrückt (mit anderen Worten herausgeblasen) werden. Die Brennstoffzelle wird also undicht.

Das Glaslot kristallisiert erst gegen Ende des Fügeprozesses (d.h. beim Aushärten bei erhöhter Temperatur) aus. Während des Fügeprozesses kann somit das mechanische Absetzen eines Brennstoffzellenstapels definiert eingestellt werden. Durch die Restviskosität (bedingt durch die Restglasphase, da die Lage nicht vollständig auskristallisiert ist) ist ein mechanischer Spannungsausgleich und/oder Spannungsabbau innerhalb des Stapels möglich. Zusätzlich ist durch die Verzahnung der auskristallisierten Lagen aus einem Glaslot und aus einer Glaskeramik eine hohe mechanische Stabilität gegeben. Durch eine geeignete Zusammensetzung der Werkstoffe (d.h. des Glaslotes und der Glaskeramik) ist der thermische Längenausdehnungskoeffizent definiert einstellbar.

Die Schicht kann aus einer Lage aus einem Glaslot und aus einer Lage aus einer Glaskeramik bestehen. Diese zweilagige Schicht ist am einfachsten und mit dem geringsten finanziellen Aufwand herzustellen, wobei dennoch alle genannten Vorteile realisiert werden.

Insbesondere kann die Schicht aus zwei Lagen aus einem Glaslot und aus einer Lage aus einer Glaskeramik bestehen, wobei die Lage aus einer Glaskeramik zwischen den beiden Lagen aus einem Glaslot angeordnet ist. Da hier zwei Lagen aus Glaslot verwendet werden, ist ein besseres Verhalten gegenüber dem Auftreten von mechanischen Spannungen gegeben. Die mechanischen Spannungen werden hier durch die zwei Lagen aus Glaslot ausgeglichen oder abgebaut.

In einer weiteren Ausgestaltung enthält das Glaslot 11 bis 13 Gew.-% Aluminiumoxid (Al₂O₃), 10 bis 14 % Boroxid (BO₂), etwa 5 Gew.-% Calciumoxid (CaO), 23 bis 26 Gew.-% Bariumoxid (BaO) und etwa 50 Gew.-% Siliziumoxid (SiO₂).

Vorzugsweise enthält die Glaskeramik 9 bis 11 Gew.-% Aluminiumoxid (Al₂O₃), 11 bis 13 Gew.-% Boroxid (BO₂), 22 bis 23 Gew.-% Bariumoxid (BaO), etwa 45 Gew.-% Siliziumoxid (SiO₂), etwa 10 Gew.-% Magnesiumoxid (MgO) und etwa 1 Gew.-% Titanoxid (TiO₂). Diese Werkstoffzusammensetzungen für das Glaslot und die Glaskeramik haben sich in der Praxis besonders bewährt beim Zusammenfügen von metallischen Bauelementen, die beispielsweise aus einer Chrom- oder einer Eisenbasislegierung bestehen. Auch für den Zusammenbau von keramischen Bauelementen ist das Glaslot und die Glaskeramik geeignet. Der Längenausdehnungskoeffizient läßt sich auf einfache Weise durch Variation der Gewichtsanteile an die Werkstoffe der zusammenzufügenden Bauelemente anpassen. Dabei kann es vorteilhaft sein, für verschiedene Lagen aus Glaslot die chemische Zusammensetzung zu variieren, um einen stufenweisen Übergang von einem zum anderen Bauteil zu erreichen. Das gleiche gilt für mehrere Lagen aus Glaskeramik.

Insbesondere können die Bauelemente metallische Verbundleiterplatten oder eine Verbundleiterplatte und der Elektrolyt der Elektrolyt-Elektroden-Einheit der Brennstoffzelle sein.

Gemäß der Erfindung besteht ein Hochtemperatur-Brennstoffzellenstapel aus einer Anzahl von solchen Hochtemperatur-Brennstoffzellen.

Weitere vorteilhafte Ausgestaltungen sind in den Unteransprüchen wiedergegeben.

Zum besseren Verständnis der Erfindung und ihrer Weiterbildungen werden mehrere Ausführungsbeispiele anhand von vier Figuren erläutert. Die Figuren zeigen jeweils einen Ausschnitt aus einer Hochtemperatur-Brennstoffzelle in schematischer Darstellung.

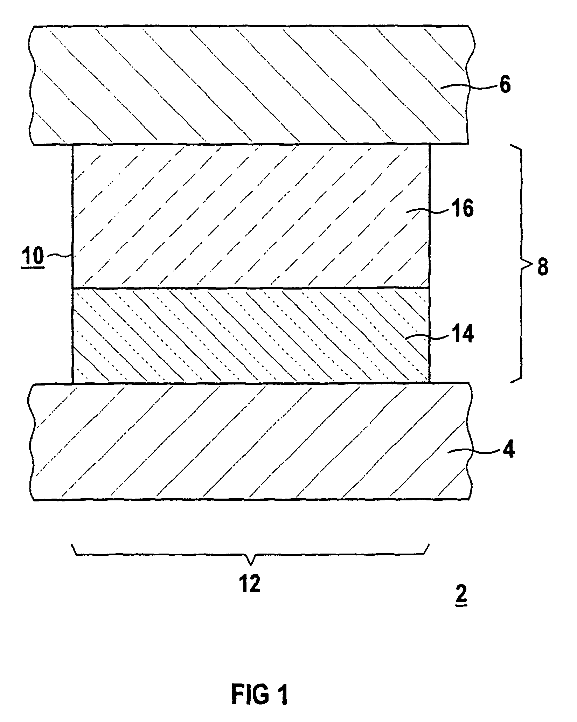

In FIG 1 erkennt man eine Hochtemperatur-Brennstoffzelle 2 (Brennstoffzelle 2) mit zwei Bauelementen 4,6. Bei den Bauelementen 4,6 handelt es sich um zwei metallische Verbundleiterplatten oder um eine metallische Verbundleiterplatte und den Elektrolyten der Elektrolyt-Elektroden-Einheit der Brennstoffzelle 2. Die Verbundleiterplatten der Brennstoffzelle 2 enthalten in der Regel eine Chrombasislegierung (d.h. daß der Werkstoff wenigstens 50 Gew.-% Chrom (Cr) enthält). Der keramische Elektrolyt der Brennstoffzelle 2 enthält beispielsweise Zirkonoxid (ZrO₂).

In der zwischen den beiden Bauelementen 4,6 gebildeten Fuge 8, die den Abstand zwischen den beiden Bauelementen 4,6 definiert, ist eine Schicht 10 angeordnet, die die Fuge 8 ausfüllt (d.h. daß die beiden Bauelemente 4,6 durch die Schicht 10 miteinander gefügt sind). Die Schicht 10 erstreckt sich über einen Fügebereich 12, wobei der Fügebereich 12 bei zwei zu fügenden Verbundleiterplatten im Randbereich der Verbundleiterplatten und damit der Brennstoffzelle 2 angeordnet ist. Die Schicht 10 dichtet den Innenraum der Brennstoffzelle 2 gegenüber der Außenatmosphäre ab. Handelt es sich bei den beiden Bauelementen 4,6 um eine Verbundleiterplatte und den Elektrolyten, so ist der Fügebereich 12 im Inneren der Brennstoffzelle 2 angeordnet. Die Schicht 10 dichtet in dieser Ausführungsform zwei Gasräume gegeneinander ab, die zwei verschiedene Betriebsmittel der Brennstoffzelle 2 beinhalten.

Die Schicht 10 besteht aus einer Lage 14 aus einem Glaslot und einer Lage 16 aus einer Glaskeramik. Die Lage 14 aus Glaslot ist unmittelbar auf dem Bauelement 4 angeordnet. Der noch verbleibende Freiraum der Fuge 8 zwischen den beiden Bauelementen 4,6 wird durch die Lage 16 aus Glaskeramik gefüllt; die Lage 16 aus Glaskeramik ist also zwischen der Lage 12 aus Glaslot und dem Bauelement 6 angeordnet. Die Reihenfolge der beiden Lagen 14,16 zwischen den beiden Bauelementen 4,6 kann genausogut auch umgekehrt sein. Die Fuge 8 besitzt in der Regel eine Breite zwischen 100 und 800 µm. Bei einer Anordnung des Fügebereiches 12 im Inneren der Brennstoffzelle 2 ist die Breite der Fuge 8 in der Regel geringer als wenn der Fügebereich 12 im Randbereich der Brennstoffzelle 2 angeordnet ist. Die Lage 14 aus Glaslot weist eine Dicke zwischen 50 und 200 µm auf, wohingegen die Lage 16 aus Glaskeramik eine Dicke zwischen 50 und 600 µm besitzt. Dabei sind allerdings Dicken unterhalb 400 µm für die Lage 16 aus Glaskeramik vorteilhafter.

Das Glaslot der Lage 14 enthält 11 bis 13 Gew.-% Aluminiumoxid (Al₂O₃), 10 bis 14 Gew.-% Boroxid (BO₂), etwa 5 Gew.-% Calciumoxid (CaO), 23 bis 26 Gew.-% Bariumoxid (BaO) und etwa 50 Gew.-% Siliziumoxid (SiO₂). Die Glaskeramik der Lage 16 enthält dagegen 9 bis 11 Gew.-% Aluminiumoxid (Al₂O₃), 11 bis 13 Gew.-% Boroxid (BO₂), 22 bis 23 Gew.-% Bariumoxid (BaO), etwa 45 Gew.-% Siliziumoxid (SiO₂), etwa 10 Gew.-% Magnesiumoxid (MgO) und etwa 1 Gew.-% Titanoxid (TiO₂). Diese Werkstoffe für die Lagen 14,16 sind nach dem Fügeprozeß weitgehend auskristallisiert; das Glaslot der Lage 14 weist allerdings noch einen Restglasanteil auf, also einen viskosen Anteil. Grundsätzlich sind für die Lagen 14,16 Glaslote bzw. Glaskeramiken als Werkstoffe geeignet, die nach dem Fügeprozeß weitgehend auskristallisiert sind.

Die Schicht 14 aus einem Glaslot wird beispielsweise durch Naßpulverspritzen oder Siebdrucken aufgetragen und anschließend bei erhöhter Temperatur angeglast. Optional kann die Lage 14 zusätzlich mechanisch bearbeitet (nachgeschliffen oder geläppt) werden. Die mechanische Behandlung kann vor oder nach dem Anglasen durchgeführt werden.

Die Lage 16 aus Glaskeramik wird durch Auflegen einer Folie, durch Naßpulverspritzen oder durch Siebdrucken aufgetragen und anschließend bei erhöhter Temperatur gesintert. Auch die Lage 16 kann optional zusätzlich mechanisch behandelt werden.

Die Brennstoffzelle 2 ist besonders gut für einen Einbau in einen Hochtemperatur-Brennstoffzellenstapel geeignet.

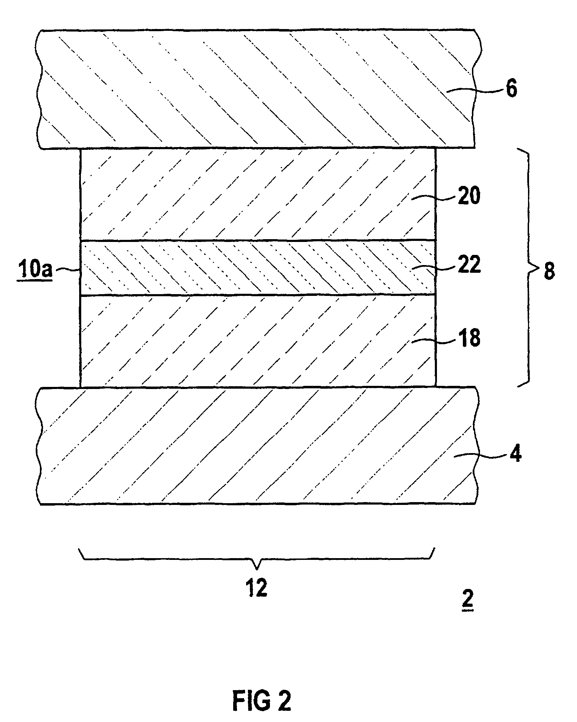

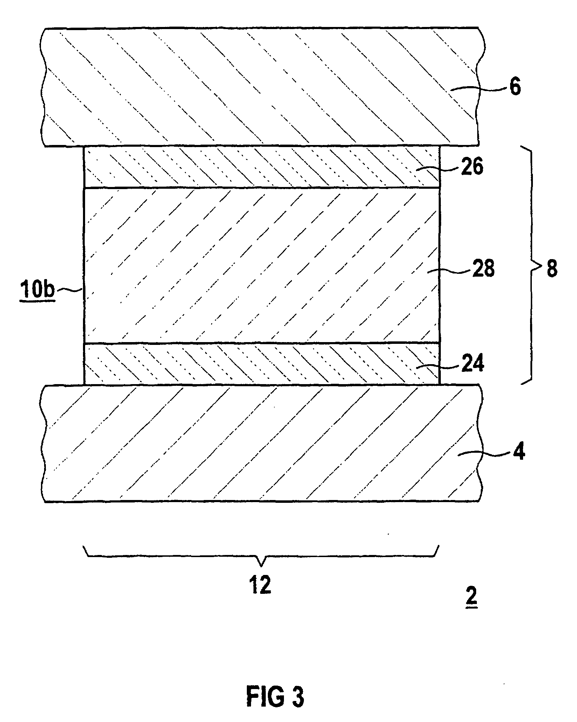

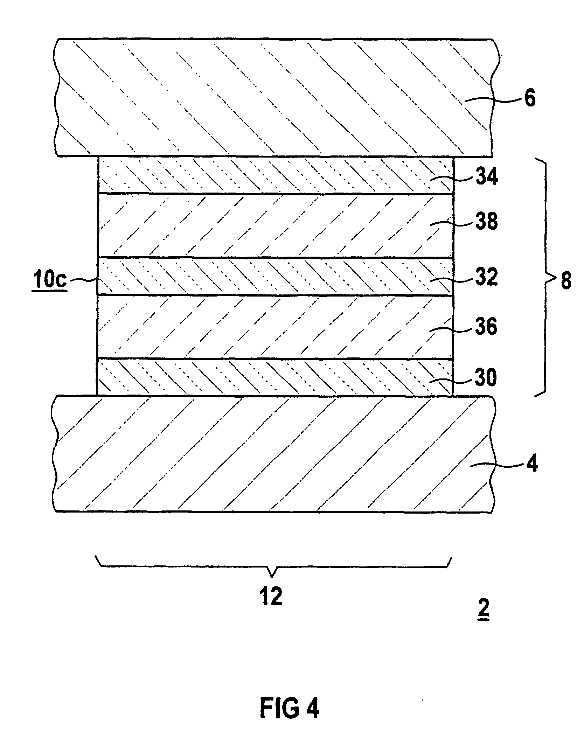

Gemäß FIG 2 umfaßt die Schicht 10a, die die Fuge 8 zwischen den Bauelementen 4,6 schließt zwei Lagen 18,20 aus einer Glaskeramik und eine Lage 22 aus einem Glaslot, wobei die Lage 22 aus Glaslot zwischen den beiden Lagen 18,20 aus Glaskeramik angeordnet ist. Die Fuge 8 ist in diesem Ausführungsbeispiel durch einen Lötprozeß (d.h. durch Verlöten der Lage 22 aus einem Glaslot) geschlossen. Das Glaslot und die Glaskeramik haben in diesem Ausführungsbeispiel und auch in den Ausführungsbeispielen der FIG 3 und 4 jeweils eine Zusammensetzung, die bereits im Zusammenhang mit den Ausführungsbeispielen in FIG 1 angegeben wurden.

Gemäß FIG 3 umfaßt die Schicht 10b zwei Lagen 24,26 aus einem Glaslot und eine Lage 28 aus einer Glaskeramik, wobei letztere zwischen den beiden Lagen 24,26 aus Glaslot angeordnet ist. Diese Ausführungsform hat den Vorteil, daß zwei voneinander räumlich getrennte Lagen 24,26 aus Glaslot zum Erfüllen der mechanischen Anforderungen an die Brennstoffzelle 2 zur Verfügung stehen. Beispielsweise wird das Eigengewicht eines Stapels erheblich besser durch zwei Lagen als durch eine Lage kompensiert.

Insbesondere können (bei Verwendung von wenigstens zwei Lagen aus Glaslot und/oder Glaskeramik), unterschiedliche Werkstoffe für die Lagen aus Glaslot und/oder für die Lagen aus Glaskeramik vorgesehen sein. Damit können unterschiedliche Anforderungen (mechanisch oder chemisch) durch verschiedene Lagen erfüllt werden.

Gemäß FIG 4 enthält die Schicht 10 drei Lagen 30 bis 34 aus einem Glaslot und zwei Lagen 36,38 aus einer Glaskeramik. Die Lage 30 aus Glaslot ist auf dem Bauelement 4 und die Lage 34 aus Glaslot auf dem Bauelement 6 angeordnet. Auf der Lage 30 aus Glaslot ist die Lage 36 aus Glaskeramik und auf der Lage 34 aus Glaslot ist die Lage 38 aus Glaskeramik angeordnet. Die beiden Lagen 36,38 aus Glaskeramik sind durch die Lage 32 aus Glaslot miteinander gefügt. Durch Verwendung mehrerer Lagen 30 bis 34 aus Glaslot und mehrerer Lagen 36 und 38 aus Glaskeramik wird die mechanische Anordnung der Brennstoffzelle 2 (und auch des -Brennstoffzellenstapels) weitergehend stabilisiert.

Eine Schicht, die Lagen aus einem Glaslot und Lagen aus einer Glaskeramik enthält, ist grundsätzlich zum Fügen von metallischen und keramischen Bauelementen geeignet. D.h. daß sie auch außerhalb einer Brennstoffzelle für einen technischen Einsatz verwendet werden kann.

## Patentansprüche

1. Hochtemperatur-Brennstoffzelle (2) mit zwei Bauelementen (4,6), die in einem Fügebereich (12) durch eine Schicht (10;10a;10b;10c) miteinander gefügt sind,
**dadurch gekennzeichnet, daß** die Schicht (10;10a;10b;10c) wenigstens eine Lage (14;22;24,26;30,32,34) aus einem Glaslot und wenigstens eine Lage (16;18,20;28;36,38) aus einer Glaskeramik enthält.

2. Brennstoffzelle (2) nach Anspruch 1,
**dadurch gekennzeichnet, daß** die Schicht (10) aus einer Lage (14) aus einem Glaslot und aus einer Lage (16) aus einer Glasgeramik besteht.

3. Brennstoffzelle (2) nach Anspruch 1,
**dadurch gekennzeichnet, daß** die Schicht (10) aus zwei Lagen (18,20) aus einer Glaskeramik und aus einer Lage (22) aus einem Glaslot besteht, wobei die Lage (22) aus Glaslot zwischen den beiden Lagen (18,22) aus Glaskeramik angeordnet ist.

4. Brennstoffzelle (2) nach Anspruch 1,
**dadurch gekennzeichnet, daß** die Schicht (10) aus zwei Lagen (24,26) aus einem Glaslot und aus einer Lage (28) aus einer Glaskeramik besteht, wobei die Lage (28) aus Glaskeramik zwischen den beiden Lagen (24,26) aus Glaslot angeordnet ist.

5. Brennstoffzelle (2) nach Anspruch 1,
**dadurch gekennzeichnet, daß** die Schicht (10) aus drei Lagen (30,32,34) aus einem Glaslot und aus zwei Lagen (36,38) aus einer Glaskeramik besteht, wobei zwischen jeweils zwei Lagen (30,32,34) aus Glaslot jeweils eine Lage (36,38) aus Glaskeramik angeordnet ist.

6. Brennstoffzelle (2) nach einem der vorhergehenden Ansprüche, **dadurch gekennzeichnet, daß** das Glaslot der Lagen (14;22;24,26;30,32,34) 11 bis 13 Gew.-% Aluminiumoxid (Al₂O₃), 10 bis 14 Gew.-% Boroxid(BO₂), etwa 5 Gew.-% Calciumoxid (CaO), 23 bis 26 Gew.-% Bariumoxid (BaO) und etwa 50 Gew.-% Siliziumoxid (SiO₂) enthält.

7. Brennstoffzelle (2) nach einem der vorhergehenden Ansprüche, **dadurch gekennzeichnet, daß** die Glaskeramik der Lagen (16;18,20;28;36,38) 9 bis 11 Gew.-% Aluminiumoxid (Al₂O₃), 11 bis 13 Gew.-% Boroxid(BO₂), 22 bis 23 Gew.-% Bariumoxid (BaO), etwa 45 Gew.-% Siliziumoxid (SiO₂), etwa 10 Gew.-% Magnesiumoxid (MgO) und etwa 1 Gew.-% Titanoxid (TiO₂)enthält.

8. Brennstoffzelle (2) nach Anspruch 4,
**dadurch gekennzeichnet, daß** die Lagen (24,26;30,32,34) aus dem Glaslot unterschiedliche Zusammensetzungen aufweisen.

9. Brennstoffzelle (2) nach Anspruch 5,
**dadurch gekennzeichnet, daß** die zwischen den Lagen (36,38) aus der Glaskeramik angeordnete Lage (32) aus dem Glaslot eine andere Zusammensetzung als die beiden äußeren Lagen (30,34) aus dem Glaslot aufweist.

10. Brennstoffzelle (2) nach einem der vorhergehenden Ansprüche, **dadurch gekennzeichnet, daß** die Bauelemente (4,6) metallische Verbundleiterplatten sind.

11. Brennstoffzelle (2) nach einem der Ansprüche 1 bis 9,
**dadurch gekennzeichnet, daß** eines der Bauelemente (4,6) eine metalische Verbundleiterplatte und das andere der beiden Bauelemente (4,6) der Elektrolyt der Elektrolyt-Elektroden-Einheit ist.

12. Brennstoffzelle (2) nach einem der vorhergehenden Ansprüche, **dadurch gekennzeichnet, daß** zwischen den beiden Bauelementen (4,6) eine Fuge (8) mit einer Breite zwischen 100 und 800 µm gebildet ist, die von der Schicht (10;10a;10b;10c) praktisch ausgefüllt ist.

13. Brennstoffzelle (2) nach einem der vorhergehenden Ansprüche, **dadurch gekennzeichnet, daß** die Lage (14;22;24,26;30,32,34) aus dem Glaslot eine Dicke zwischen 50 und 200 µm aufweist.

14. Brennstoffzelle (2) nach einem der vorhergehenden Ansprüche, **dadurch gekennzeichnet, daß** keine Lage (16;18,20;28;36,38) aus Glaskeramik dicker als 400 µm ist.

15. Hochtemperatur-Brennstoffzellenstapel mit Hochtemperatur-Brennstoffzellen (2) nach einem der Ansprüche 1 bis 14.

## Claims

1. High-temperature fuel cell (2) having two components (4, 6) which are joined together in a joining region (12) by a layer (10; 10a; 10b; 10c),
**characterised in that**
the layer (10; 10a; 10b; 10c) contains at least one glass solder ply (14; 22; 24, 26; 30, 32, 34) and at least one glass ceramic ply (16; 18, 20; 28; 36, 38).

2. Fuel cell (2) according to claim 1,
**characterised in that**
the layer (10) consists of a glass solder ply (14) and a glass ceramic ply (16).

3. Fuel cell (2) according to claim 1,
**characterised in that**
the layer (10) consists of two glass ceramic plies (18, 20) and one glass solder ply (22), wherein the glass solder ply (22) is arranged between the two glass ceramic plies (18, 20).

4. Fuel cell (2) according to claim 1,
**characterised in that**
the layer (10) consists of two glass solder plies (24, 26) and one glass ceramic ply (28), wherein the glass ceramic ply (28) is arranged between the two glass solder plies (24, 26).

5. Fuel cell (2) according to claim 1,
**characterised in that**
the layer (10) consists of three glass solder plies (30, 32, 34) and two glass ceramic plies (36, 38), wherein one glass ceramic ply (36, 38) is in each case arranged between two glass solder plies (30, 32, 34).

6. Fuel cell (2) according to one of the preceding claims, **characterised in that**
the glass solder of plies (14; 22; 24, 26; 30, 32, 24) contains 11 to 13 wt.% aluminium oxide (Al₂O₃), 10 to 14 wt.% boric oxide (BO₂), approx. 5 wt.% calcium oxide (CaO), 23 to 26 wt.% barium oxide (BaO) and approx. 50 wt.% silicon oxide (SiO₂).

7. Fuel cell (2) according to one of the preceding claims, **characterised in that**
the glass ceramic of plies (16; 18, 20; 28; 36, 38) contains 9 to 11 wt.% aluminium oxide (Al₂O₃), 11 to 13 wt.% boric oxide (BO₂), 22 to 23 wt.% barium oxide (BaO), approx. 45 wt.% silicon oxide (SiO₂), approx. 10 wt.% magnesium oxide (MgO) and approx. 1 wt.% titanium oxide (TiO₂).

8. Fuel cell (2) according to claim 4,
**characterised in that**
the glass solder plies (24, 26; 30, 32, 34) exhibit different compositions.

9. Fuel cell (2) according to claim 5,
**characterised in that**
the glass solder ply (32) arranged between the glass ceramic plies (36, 38) exhibits a composition different from that of the two outer glass solder plies (30, 34).

10. Fuel cell (2) according to one of the preceding claims, **characterised in that**
the components (4, 6) are metallic composite conductor plates.

11. Fuel cell (2) according to one of claims 1 to 9,
**characterised in that**
one of the components (4, 6) is a metallic composite conductor plate and the other of the two components (4, 6) is the electrolyte of the electrolyte/electrode unit.

12. Fuel cell (2) according to one of the preceding claims,
**characterised in that**
a joint (8) with a width of between 100 and 800 µm is formed between the two components (4, 6), which joint is virtually filled by the layer (10; 10a; 10b; 10c).

13. Fuel cell (2) according to one of the preceding claims,
**characterised in that**
the glass solder ply (14; 22; 24, 26; 30, 32, 34) exhibits a thickness of between 50 and 200 µm.

14. Fuel cell (2) according to one of the preceding claims,
**characterised in that**
no glass ceramic layer (16; 18, 20; 28; 36, 38) is thicker than 400 µm.

15. High-temperature fuel cell stack comprising high-temperature fuel cells (2) according to one of claims 1 to 14.

## Revendications

1. Pile (2) à combustible fonctionnant à haute température, comprenant deux éléments (4, 6) constitutifs qui sont joints entre eux dans une zone (12) de joint par une couche (10 ; 10a ; 10b ; 10c),
**caractérisée en ce que** la couche (10 ; 10a ; 10b ; 10c) comporte au moins une strate (14 ; 22 ; 24 ; 26 ; 30, 32, 34) en une brasure pour du verre et au moins une strate (16 ; 18 ; 20 ; 28 ; 36, 38) en une vitrocéramique.

2. Pile (2) à combustible suivant la revendication 1,
**caractérisée en ce que** la couche (10) est constituée d'une strate (14) en une brasure pour du verre et en une strate (16) en une vitrocéramique.

3. Pile (2) à combustible suivant la revendication 1,
**caractérisée en ce que** la couche (10) est constituée de deux strates (18, 20) en une vitrocéramique et d'une strate (22) en une brasure pour du verre, la strate (22) en brasure pour du verre étant interposée entre les deux strates (18, 22) en vitrocéramique.

4. Pile (2) à combustible suivant la revendication 1,
**caractérisée en ce que** la couche (10) est constituée de deux strates (24, 26) en une brasure pour du verre et en une strate (28) en une vitrocéramique, la strate (28) en vitrocéramique étant interposée entre les deux strates (24, 26) en brasure pour du verre.

5. Pile (2) à combustible suivant la revendication 1,
**caractérisée en ce que** la couche (10) est constituée de trois strates (30, 32, 34) en une brasure pour du verre et de deux strates (36, 38) en une vitrocéramique, chaque strate (36, 38) en vitrocéramique étant interposée respectivement entre deux strates (30, 32, 34) en brasure pour du verre.

6. Pile (2) à combustible suivant l'une des revendications précédentes, **caractérisée en ce que** la brasure pour du verre des strates (14 ; 22 ; 24 ; 26 ; 30, 32, 34) contient de 11 à 13% en poids d'oxyde d'aluminium (Al₂O₃), de 10 à 14% en poids d'oxyde de bore (BO₂), environ 5% en poids d'oxyde de calcium (CaO), de 23 à 26% en poids d'oxyde de baryum (BaO) et environ 50% en poids d'oxyde de silicium (SiO₂).

7. Pile (2) à combustible suivant l'une des revendications précédentes, **caractérisée en ce que** la vitrocéramique des strates (16 ; 18 ; 20 ; 28 ; 36, 38) contient de 9 à 11% en poids d'oxyde d'aluminium (Al₂O₃), de 11 à 13% en poids d'oxyde de bore (BO₂), de 22 à 23% en poids d'oxyde de baryum (BaO), environ 45% en poids d'oxyde de silicium (SiO₂), environ 10% en poids d'oxyde de magnésium (MgO) et environ 1% en poids d'oxyde de titane (TiO₂).

8. Pile (2) à combustible suivant la revendication 4,
**caractérisée en ce que** les strates (24 ; 26 ; 30, 32, 34) en la brasure pour du verre ont des compositions différentes.

9. Pile (2) à combustible suivant la revendication 5,
**caractérisée en ce que** la strate (32) en la brasure pour du verre interposée entre les strates (36, 38) en vitrocéramique a une composition différente de celle des deux autres strates (30, 34) en la brasure pour du verre.

10. Pile (2) à combustible suivant l'une des revendications précédentes, **caractérisée en ce que** les éléments (4, 6) constitutifs sont des plaques métalliques d'interconnexion.

11. Pile (2) à combustible suivant l'une des revendications 1 à 9,
**caractérisée en ce que** l'un des éléments (4, 6) constitutifs est une plaque métallique d'interconnexion et l'autre des deux éléments (4, 6) constitutifs est l'électrolyte de l'unité électrolyte-électrodes.

12. Pile (2) à combustible suivant l'une des revendications précédentes, **caractérisée en ce qu'**il est formé entre les deux éléments (4, 6) constitutifs un joint (8) d'une largeur comprise entre 100 et 800 µm qui est empli pratiquement de la couche (10 ; 10a ; 10b ; 10c).

13. Pile (2) à combustible suivant l'une des revendications précédentes, **caractérisée en ce que** la strate (14 ; 22 ; 24 ; 26 ; 30, 32, 34) en la brasure pour du verre a une épaisseur comprise entre 50 et 200 µm.

14. Pile (2) à combustible suivant l'une des revendications précédentes, **caractérisée en ce qu'**aucune strate (16 ; 18 ; 20 ; 28 ; 36, 38) en vitrocéramique n'a une épaisseur supérieure à 400 µm.

15. Empilement de piles à combustible fonctionnant à haute température ayant des piles (2) à combustible fonctionnant à haute température suivant l'une des revendications 1 à 14.
